# EUROPEAN PATENT SPECIFICATION

(11) **EP 4 494 933 B1**
(45) Date of publication and mention of the grant of the patent: **13.05.2026**
(21) Application number: 24189391.6
(22) Date of filing: 18.07.2024
(51) Int. Cl.: B60N 2/01, B60N 2/06, B60N 2/30

(54) **COCKPIT FOR A MOTOR VEHICLE AND METHOD FOR THE RECONFIGURATION OF A COCKPIT**
COCKPIT FÜR EIN KRAFTFAHRZEUG UND VERFAHREN ZUR REKONFIGURATION EINES COCKPITS
HABITACLE DE VÉHICULE AUTOMOBILE ET PROCÉDÉ DE RECONFIGURATION D'UN HABITACLE

(30) Priority: 20.07.2023 IT 202300015255
(43) Date of publication of application: 22.01.2025
(73) Proprietor: FERRARI S.p.A., 41100 Modena (IT)
(72) Inventor: CONIGLIARO, Vito, 41100 Modena (IT); DE PAOLI, Alessandro Paolo, 41100 Modena (IT); GRANJARD, Thomas, 41100 Modena (IT); TAYLOR, Daniel Martin, 41100 Modena (IT)
(74) Representative: Studio Torta S.p.A.

(56) References cited:
- EP-A1- 1 491 431
- US-A1- 2020 254 906

## Description

### CROSS-REFERENCE TO RELATED APPLICATIONS

This patent application claims priority from Italian patent application no. 102023000015255 filed on July 20, 2023.

### TECHNICAL FIELD

This invention relates to a cockpit for a motor vehicle and a method for reconfiguring the cockpit.

### BACKGROUND

Motor vehicles comprise, in a known way:
- a passenger compartment defining a body;
- multiple wheels;
- a steering wheel arranged inside the passenger compartment which can be driven by a driver to steer the front wheels and thus enable the motor vehicle to follow a curved trajectory; and
- pedals comprising an accelerator and a brake that the driver can activate to increase the drive torque or exert a braking torque on the wheels respectively, so as to control the speed of the motor vehicle.

The passenger compartments of motor vehicles normally intended for use on the road implement the so-called "two-seater" configuration.

In this "two-seater" configuration, the passenger compartment also comprises a pair of front seats intended to be occupied by a driver and a passenger respectively, and arranged next to each other along a transverse direction of the motor vehicle orthogonal to a longitudinal direction defining a normal forward direction of the motor vehicle.

The steering wheel and the pedals are located opposite the driver's seat and are basically arranged in a left or right front corner of the vehicle.

With particular reference to sports motor vehicles, passenger compartments are known that implement the so-called "single-seater" configuration.

In this "single-seater" configuration, the passenger compartment comprises a single front seat arranged in a central position opposite the steering wheel and the pedals.

There is a need in the sector to provide motor vehicles that enable simple and easy reconfiguration between the above-mentioned "single-seater" and "two-seater" configurations. An example of a cockpit can be seen in EP1491431A1.

### SUMMARY

The purpose of this invention is to produce a cockpit, which makes it possible to meet the need mentioned above.

The above-mentioned purpose is achieved with this invention, as it relates to a cockpit according to what is defined in claim 1.

This invention also relates to a method for reconfiguring a cockpit according to what is defined in claim 10.

### BRIEF DESCRIPTION OF THE DRAWINGS

In order to better understand this invention, a nonlimiting preferred embodiment thereof will now be described by way of example with reference to the accompanying drawings, in which:
- Figure 1 is a perspective view of a motor vehicle comprising a first embodiment of a cockpit produced according to the precepts of this invention with parts removed for clarity;
- Figure 2 is a perspective view on a very enlarged scale of the first embodiment of the cockpit in Figure 1, with parts removed for clarity and in a first, "two-seater" operating configuration;
- Figure 3 is a perspective view on a very enlarged scale of the first embodiment of the cockpit in Figure 2, with parts removed for clarity and in a second, "single-seater" operating configuration.

### DESCRIPTION OF EMBODIMENTS

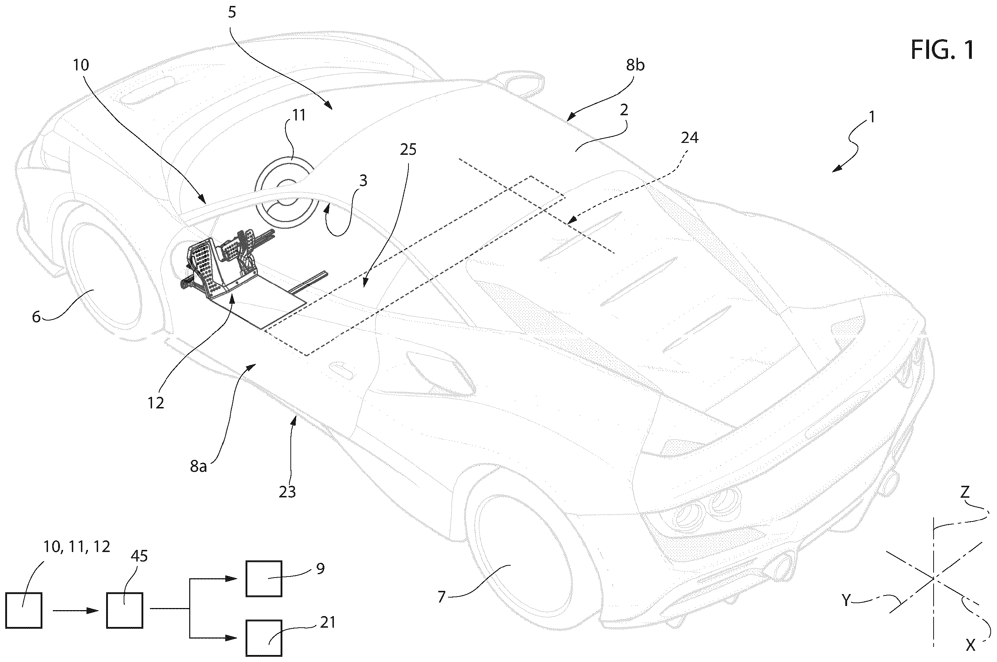

With reference to Figure 1, reference number 1 indicates a motor vehicle comprising a body 2 defining a passenger compartment 3.

It should be specified that, below in this description, expressions such as "above", "below", "in front of", "behind" and the like are used with reference to the normal movement of the motor vehicle 1.

It is also possible to define:
- a longitudinal axis X integral with the motor vehicle 1, arranged, in use, horizontal and parallel to a normal forward moving direction of the motor vehicle 1;
- a transversal axis Y integral with the motor vehicle 1, arranged, in use, horizontal and orthogonal to the axis X; and
- an axis Z integral with the motor vehicle 1, arranged, in use, vertical and orthogonal to the axes X, Y.

The motor vehicle 1 also comprises (Figure 1):
- a pair of front wheels 6 and a pair of back wheels 7;
- a known engine 9 only schematically illustrated in Figure 1 and operationally connected to the wheels 6 and/or 7 to exert drive torque on the wheels 6 and/or 7; and
- a brake system 21, also only schematically illustrated, in Figure 1 that can be driven to exert a braking torque on the wheels 6, 7.

The motor vehicle 1 also comprises (Figure 1):
- a windscreen 5 delimiting the passenger compartment 3 at the front; and
- a pair of doors 8a, 8b hinged to the body 2 that can be moved between a closed position wherein they delimit the passenger compartment 3 to the side and prevent entry into/exit from the passenger compartment 3 and an open position wherein they enable entry into/exit from the passenger compartment 3.

The body 2 also comprises a pair of door sills 23, 24 with longitudinal ends opposite each other. The door sills 23, 24 delimit the passenger compartment 3 and are adjacent to corresponding doors 8a, 8b when the doors 8a, 8b are in the respective closed positions.

The motor vehicle 1 also comprises control members 10 arranged in the passenger compartment 3 that the driver can activate to set a forward trajectory of the motor vehicle 1 with a desired speed.

In a known way, the control members 10 comprise:
- a steering wheel 11 arranged inside the passenger compartment 3 that can be driven by the driver; and
- pedals 12 also arranged inside the passenger compartment 2 that the driver can activate.

The control members 10 are connected to the engine 9, to the brake system 21, and to the wheels 6 and/or 7 implementing a technology known in the sector as "drive by wire".

In this description, the term "drive by wire" mode means that the steering wheel 11 does not have physical or mechanical connections with the wheels 6, 7.

The motor vehicle 1 also comprises a control unit 45 (Figure 1) programmed to receive, as input, the actions requested at the steering wheel 11 and pedals 12 and to generate, as output, control signals for the engine 9 and the brake system 21.

The passenger compartment 3 houses a front cockpit 25, only schematically illustrated in Figure 1, in a known way.

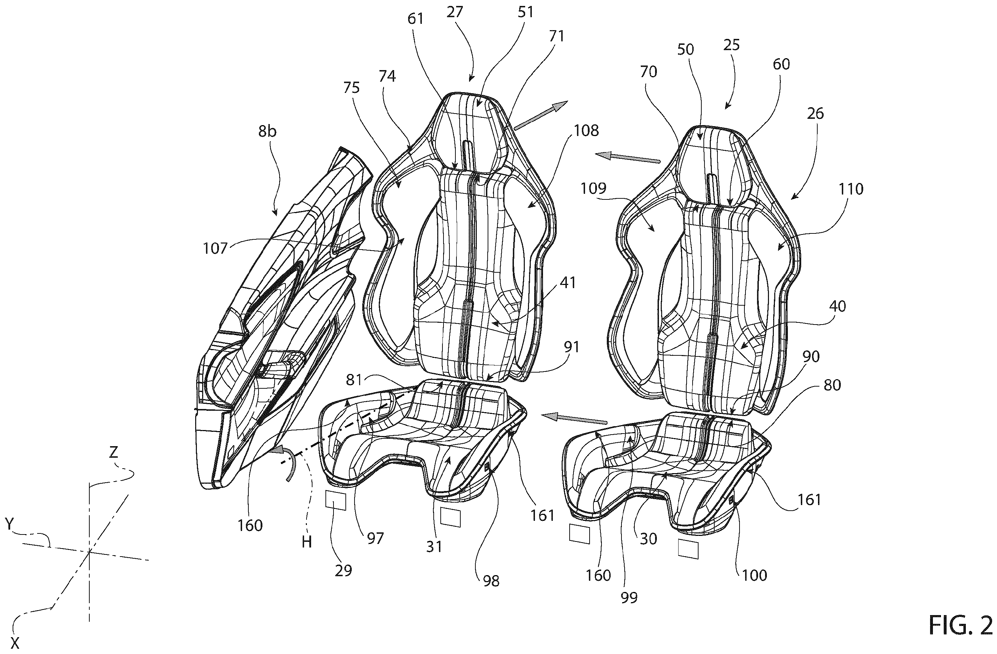

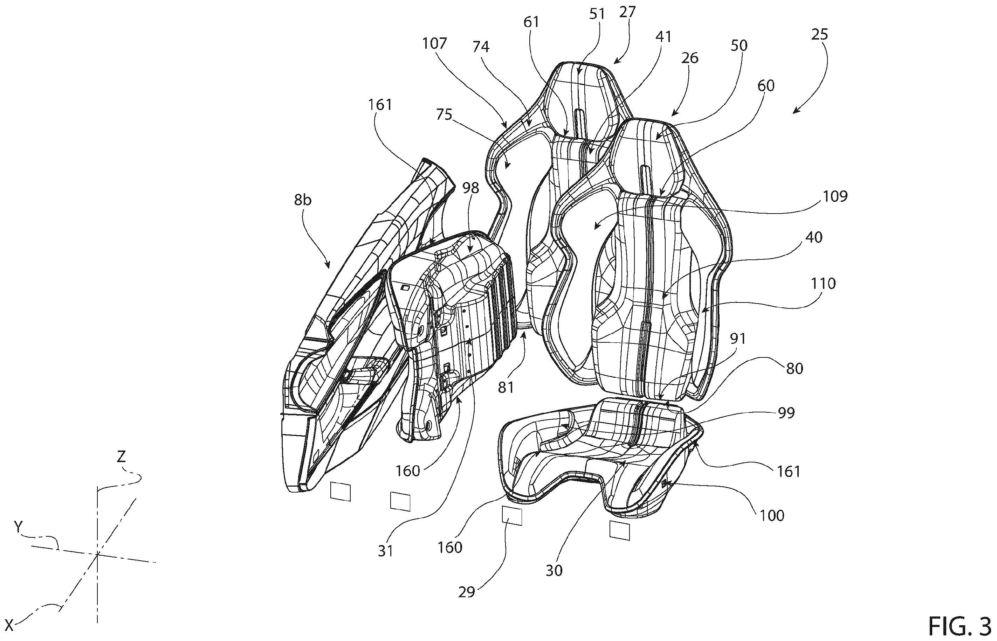

The cockpit 25 can be selectively moved between:
- a first "two-seater" configuration illustrated in Figure 2, wherein it defines a seat 26 for a driver and a seat 27 for a passenger arranged next to each other and spaced apart parallel to the axis Y; and
- a "single-seater" configuration illustrated in Figure 3, wherein the only seat 26 is available for the driver.

With particular reference to Figure 2, the cockpit 25 also comprises a frame 29 (only schematically illustrated) fixed to the body 2.

With reference to the first, "two-seater" configuration illustrated in Figure 2, the seats 26, 27 are next to each other parallel to the axis Y and each comprises:
- a respective seat cushion 30, 31;
- a respective backrest 40, 41; and
- a respective headrest 50, 51.

Each backrest 40, 41 comprises, in particular:
- a corresponding upper edge 60, 61 extended parallel to the axis Y and connected to a lower edge 70, 71 of the corresponding headrest 50, 51; and
- a corresponding lower edge 80, 81 extended parallel to the axis Y and connected to a rear and upper edge 90, 91 of the corresponding seat cushion 30, 31.

Each seat cushion 30, 31 comprises a corresponding pair of edges 160, 161 with opposite ends.

In the first, "two-seater" configuration of the cockpit 25, the edges 160, 161 are spaced apart parallel to the axis Y.

In particular, the edge 161 of the seat cushion 31 is interposed parallel to the axis Y between the edge 160 of the seat cushion 31 and the edge 160 of the other seat cushion 30.

The edge 160 of the seat cushion 30 is interposed parallel to the axis Y between the edge 161 of the seat cushion 31 and the edge 161 of the other seat cushion 30.

The edges 160, 161 of the respective seat cushions 30, 31 thus define respective horizontal planes orthogonal to the axis Z.

Each seat 26; 27 comprises, in addition:
- a pair of respective sides 97, 98; 99, 100 arranged on corresponding opposite sides of the corresponding seat cushion 30; 31; and
- a pair of respective sides 107, 108; 109, 110 arranged on corresponding opposite sides of the corresponding backrest 40; 41.

The sides 107, 108; 109, 110 each comprise a support 73 and a cushion 74 supported by the support 73.

In the first, "two-seater" configuration of the cockpit 25, the seats 26, 27 are arranged in respective first positions next to each other parallel to the axis Y.

In the above-mentioned first positions of the seats 26, 27, the seat cushion 31 and the backrest 41 of the seat 27 are also arranged in a second and third position respectively wherein they are next to each other parallel to the axis Y respectively to the seat cushion 30 and the backrest 40 of the seat 26.

Advantageously, the seat 26 can be moved parallel to the axis Y between the first position and a fourth position, the seat cushion 31 can be moved between the second position and a fifth position, and the backrest 41 can be moved between the third position and a sixth position parallel to the axis (X);
the cockpit 25 is selectively movable to the second configuration, wherein the seat 26 is in the fourth position, the seat cushion 31 is in the fifth position, and the backrest 41 is in the sixth position;
the seat 26, when arranged in the fourth position, occupies, at least partially, the space occupied by the seat 27 when the cockpit 25 is in the first, single-seater configuration.

More specifically, in the second, "single-seater" configuration of the cockpit 25, the seat 26 is arranged equally distant between the door sills 23, 24 parallel to the axis Y, and is intended to be occupied by the driver.

The seat cushion 30 and the backrest 40 of the seat 26 arranged in the fourth position occupy, at least partially, the respective spaces occupied by the seat cushion 31 and by the backrest 41 arranged in the respective second and third positions.

More specifically, the seat cushion 30 and the backrest of the seat 26 arranged in the fourth position occupy, at least partially, the respective spaces occupied in the first position.

More specifically, the seat 26 in the second position is in the position midway between the door sills 23, 24, i.e. at the same distance between the door sills 23, 24 parallel to the axis Y.

In the second, "single-seater" configuration, the seat cushion 31 is arranged facing the door 8b arranged in the respective closed position and has the edge 160 arranged below the edges 161. The seat cushion 31 extends on a plane basically vertical and orthogonal to the axis Y.

The edges 160, 161 of the seat cushion 31 are arranged at a first distance, in the example illustrated, measured parallel to the axis Y in the second, "single-seater" configuration of the cockpit 25 below a second distance measured parallel to the axis Y in the first, "two-seater" configuration of the cockpit 25.

The seat cushion 31 is arranged, in the fifth position, spaced apart from the seat 26, with reference to the axis Y.

The backrest 41 is arranged, in the sixth position, set back and spaced apart from the seat 26, with reference to a normal forward direction of the motor vehicle 1 parallel to the axis X.

In particular, in a view parallel to the axis X, the seat 26 at least partially overlaps the backrest 41 of the seat 27.

In a view parallel to the axis Y, the seat 26 at least partially overlaps the seat cushion 31 of the seat 27.

The transition of the cockpit 25 from the first to the second configuration and vice versa occurs thanks to:
- the translation of the backrest 41 of the seat 27 parallel to the axis X from the third position to the sixth position, which is more set back than the third position, with reference to the normal forward direction of the motor vehicle 1 parallel to the axis X;
- the rotation of the seat cushion 31 of the seat 27 around an axis H from the second position to the fourth position, so as to arrange the seat 27 in the second position; and
- the translation of the seat 26 parallel to the axis Y from the first position to the fourth position.

The axis H is parallel to the axis X in the example illustrated.

The transition of the cockpit 25 from the first to the second configuration, and vice versa, also occurs manually or by driving an actuator (not illustrated).

In the first, "two-seater" configuration of the cockpit 25, the seat 27 is arranged next to the door sill 24 and the seat 26 is arranged next to the door sill 23, thus implementing a left-hand drive mode of the motor vehicle 1.

In the second, "single-seater" configuration of the cockpit 25, the seat 26 in the second position is in the position midway between the door sills 23, 24, i.e. at the same distance between the door sills 23, 24 parallel to the axis Y.

In a way not described in detail since not necessary for this invention, the pedals 12 and the steering wheel 11 can be moved parallel to the axis Y to encourage the transformation of the motor vehicle 1 between the first and second configuration.

In particular, the pedals 12 and the steering wheel 11 may be moved parallel to the axis Y between:
- a seventh position (Figure 1) assumed when the cockpit 25 is in the first, "two-seater" configuration and wherein they face the seat 26; and
- an eighth position (not illustrated) assumed when the cockpit 25 is in the second, "single-seater" configuration and wherein they face the seat 27.

The pedals 12 and the steering wheel 11 are arranged adjacent to the door sill 23 when they are arranged in the seventh position. In this seventh position, a first distance between the pedals 12 and the steering wheel 11, and the door sill 23 is less than a second distance between the pedals 12 and the steering wheel 11, and the door sill 24. The above-mentioned first and second distance are measured parallel to the axis Y.

The pedals 12 and the steering wheel 11 are arranged in a position midway between the door sills 23, 24 when they are arranged in the eighth position. In this eighth position, the pedals 12 and the steering wheel 11 are equally spaced apart from the door sills 23, 24 parallel to the axis Y.

The operation of the cockpit 25 of the motor vehicle 1 is described starting from a condition wherein the cockpit 25 is in the first, "two-seater" configuration.

In this first, "two-seater" configuration, the seats 26, 27 are arranged in respective first positions and are intended to be occupied by the driver and the passenger respectively.

The seat 26 is interposed between the door sill 23 and the seat 27 and the seat 27 is interposed between the other seat 26 and the other door sill 24 parallel to the axis Y.

More specifically, the backrest 41 of the seat 27 is arranged in the third position and the seat cushion 31 of the seat 27 is arranged in the second position wherein the respective edges 160, 161 define a horizontal plane orthogonal to the axis Y.

The pedals 11 and the steering wheel 12 are arranged in the seventh position, wherein they face the seat 26 parallel to the axis X, to enable the driver to guide them.

If one wishes to reconfigure the motor vehicle 1, so as to arrange the cockpit 25 in the second, "single-seater" configuration, it is enough to drive the actuator so as to cause, sequentially:
- the translation of the backrest 41 of the seat 27 parallel to the axis X from the third position to the sixth position, which is more set back than the first position;
- the rotation of the seat cushion 31 of the seat 27 around the axis H from the second position to the fifth position, so as to arrange the seat 27 in the second position; and
- the translation of the seat 26 parallel to the axis Y from the first position to the fourth position.

At the end of the transition, the cockpit 25 is in the second configuration wherein:
- the seat 26 in the second position is located in a position midway between the door sills 23, 24 occupying at least partially the space previously occupied by the seats 26, 27 arranged in the first position and can, thus, be occupied by the driver;
- the backrest 41 in the sixth position is set back and offset in relation to the seat 26 parallel to the axis Y; and
- the seat cushion 31 is in the fourth position wherein the edges 160, 161 define a vertical plane, and is spaced apart from the seat 26 in the second position parallel to the axis Y.

The pedals 11 and the steering wheel 12 are also moved parallel to the axis Y, in a known way not illustrated, from the seventh position to the eighth position, wherein they face the seat 26 parallel to the axis X, to enable the driver to guide them.

If one wishes to reconfigure the motor vehicle 1, so as to rearrange the cockpit 25 in the second, "two-seater" configuration, it is enough to drive the actuator so as to cause, sequentially:
- the translation of the seat 26 parallel to the axis Y from the fourth position to the first position;
- the rotation of the seat cushion 31 of the seat 27 around the axis H from the fourth position to the fifth position; and
- the translation of the backrest 41 of the seat 27 parallel to the axis X from the sixth position to the third position so as to draw the edges 81 near the seat cushion 31, so as to arrange the seat 27 in the first position.

Irrespective of the fact that the cockpit 25 is in the first, "two-seater" configuration, or in the second, "single-seater" configuration, the control members 10 control the engine 9, the wheels 6, 7, and the brake system 21 implementing a technology known in the sector as "drive by wire".

The advantages enabled by this invention will be apparent from an examination thereof.

In particular, the cockpit 25 can be moved between the first, "two-seater" configuration wherein it defines the seat 26 for the driver and the other seat 27 for the passenger next to each other in the respective first positions, and the second, "single-seater" configuration wherein it defines only the seat 26 in the second position for the driver, simply by translating the seat 26 parallel to the axis Y, withdrawing the backrest 41 parallel to the axis X and rotating the seat cushion 31 around the axis **H.**

In this way, the motor vehicle 1 can be quickly and simply made more suitable for road use when the cockpit 25 assumes the first, "two-seater" configuration or sports use wherein the cockpit 25 assumes the second, "single-seater" configuration.

Finally, it is clear that changes may be made to the cockpit 25, and to the reconfiguration method implemented according to this invention, and variations produced thereto that, in any case, do not depart from the scope of protection defined by the claims.

In particular, in the first, "two-seater" configuration, the seat 26 for the driver could be arranged facing the door sill 24 and the seat 27 for the passenger could be arranged facing the other door sill 23, thus implementing a right-hand drive mode in the motor vehicle 1.

## Claims

1. A cockpit (25) for a motor vehicle (1), comprising:
- a first seat (26) comprising, in turn, a first seat cushion (30) and a first backrest (40); and
- a second seat (27) comprising, in turn, a second seat cushion (31) and a second backrest (41);
said cockpit (25) being available in a first two-seater configuration, wherein said first seat (26) is in a first position, wherein it is next to said second seat (27) along a first axis (Y);
said second seat cushion (31) and said second backrest (41) being arranged in a second and a third position, respectively, when said cockpit (25) is in said first position;
**characterized in that** said first seat (26) can be moved along said first axis (Y) between said first position and a fourth position, said second seat cushion (31) can be moved between said second position and a fifth position and said second backrest (41) can be moved between said third position and a sixth position parallel to a second axis (X), which is transverse to said first axis (Y);
said cockpit (25) being selectively movable to a second single-seater configuration, wherein said first seat (26) is in said fourth position, said second seat cushion (31) is in said fifth position and said second backrest (41) is in said sixth position;
said first seat (26), in said fourth position, being at least partly arranged in the space occupied by said second seat (27) when said cockpit (25) is in said first configuration.

2. The cockpit according to claim 1, **characterized in that** said first seat cushion (30) of said first seat (26), in said fourth position, is at least partly arranged in the space occupied by said second seat cushion (31) arranged in said second position; and/or
**characterized in that** said first backrest (40) of said first seat (26), in said fourth position, is at least partly arranged in the space occupied by said second backrest (41) arranged in said third position.

3. The cockpit according to claim 1 or 2, **characterized in that** said first seat (26) arranged in said fourth position at least partly overlaps said second backrest (41) arranged in said sixth position, in a view parallel to said second axis (X);
said second backrest (41) arranged in said sixth position being staggered along said first axis (Y) relative to said first seat (26) arranged in said second position; and/or
**characterized in that** said first seat (26) arranged in said fourth position at least partly overlaps said second seat cushion (31) arranged in said fifth position, in a view parallel to said first axis (Y).

4. The cockpit according to any one of the preceding claims, **characterized in that** said second seat cushion (31) can rotate around a third axis (H), which is parallel to said second axis (X), between said third and fourth positions.

5. The cockpit according to claim 4, **characterized in that** said second seat cushion (31) comprises a first and a second lateral end edges (160, 161) opposite one another;
said second edge (161) being interposed, along said first axis (Y), between said first edge (160) and said first seat (26) in said first configuration of said cockpit (25);
said second edge (161) being arranged at a first distance from said first edge (160) along said first axis (Y) in the first configuration and at a second distance, which is smaller than the first distance, from said first edge (160) along said first axis (Y) in said second configuration.

6. The cockpit according to any one of the preceding claims, **characterized in that** said second axis (X) and said third axis (H) are parallel to one another; and/or
**characterized in that** the first seat cushion (30) and said first backrest (40) can slide together in an integral manner parallel to said first axis (Y).

7. A motor vehicle (1) comprising:
- a passenger compartment (3);
- a plurality of driving members (10; 11, 12), which are housed inside said passenger compartment (3) and can be operated by a driver in order to control the trajectory and the speed of said motor vehicle (1);
- at least one control member (6, 7, 9, 21) connected to at least one driving member (10; 11, 12) through a drive by wire mode; and
- said cockpit (25) according to any one of the preceding claims.

8. The motor vehicle according to claim 7, **characterized in that** it further comprises:
- a body (2);
- a first and a second door (8a, 8b), which can be moved relative to said body (2) between respective seventh open positions, wherein they allow access to said passenger compartment (3), and respective eighth closed position, wherein they forbid access to said passenger compartment (3);
said second seat cushion (31) being interposed between said second door (8b) arranged in the respective eighth closed position and said first seat (26) arranged in said first position, when in it is arranged in said second position;
said second seat cushion (31) facing said second door (8b) arranged in the respective eighth closed position, when in it is arranged in said second position.

9. The motor vehicle according to claim 7 or 8, **characterized in that** said second backrest (41) is set back relative to said first seat (26) in said second configuration of the cockpit (25), with reference to a normal forward moving direction, in use, of said motor vehicle (1) parallel to said second axis (X).

10. A method for the configuration of a cockpit (25) for a motor vehicle (1), comprising the steps of:
i) arranging said cockpit (25) to a first two-seater configuration, wherein a first seat (26) is in a first position, wherein it is next to a second seat (27) along a first axis (Y);
said first seat (26) comprising, in turn, a first seat cushion (30) and a first backrest (40);
said second seat (27) comprising, in turn, a second seat cushion (31) and a second backrest (41);
said second seat cushion (31) and said second backrest (41) being arranged in a second and a third position, respectively, when said cockpit (25) is in said first position;
**characterized in that** it comprises the step ii) of shifting said cockpit (25) to a second single-seater configuration which said first seat (26) is in a fourth position, said second seat cushion (31) is in a fifth position and said second backrest (41) is in a sixth position;
said step ii) comprising the step iii) of placing at least part of said first seat (26) in the fourth position in the space occupied by said second seat (27) in said first configuration.

11. The method according to claim 10, **characterized in that** said step iii) comprises the steps of:
iv) at least partly placing said first seat cushion (30) of said first seat (26) in said fourth position in the space occupied by said second seat cushion (31) arranged in said second position; and/or
v) at least partly placing said first backrest (40) of said first seat (26) in said fourth position in the space occupied by said second backrest (41) arranged in said third position.

12. The method according to claim 11, **characterized in that** said step ii) comprises the steps of:
vi) moving said second backrest (41) from said third position to said sixth position along a second axis (X) parallel to said first axis (Y);
vii) moving said second seat cushion (31) from said second position to said fifth position; and
viii) moving said first seat (26) towards said second seat cushion (31) from said first position, parallel to said first axis (Y), up to said fourth position, wherein it is staggered, along said first axis (Y), relative to said second backrest (41) arranged in said sixth position.

13. The method according to any one of the claims from 10 to 12, **characterized in that** said step viii) comprises the steps of:
ix) shifting said first seat (26) in said fourth position so that it at least partly overlaps said second backrest (41) arranged in said sixth position, in a view parallel to said second axis (X); and/or
x) shifting said first seat (26) in said fourth position so that it at least partly overlaps said second seat cushion (31) arranged in said fifth position, in a view parallel to said first axis (Y).

14. The method according to any one of the claims from 10 to 13, **characterized in that** said step vii) comprises the step xi) of rotating said second seat cushion (31) towards a door (8b) of said motor vehicle (1) until it faces said door (8b) in said second position of said second seat cushion (31) around a third axis (H) parallel to said second axis (X).

## Patentansprüche

1. Cockpit (25) für ein Kraftfahrzeug (1), umfassend:
- einen ersten Sitz (26), der seinerseits ein erstes Sitzkissen (30) und eine erste Rückenlehne (40) umfasst, und
- einen zweiten Sitz (27), der seinerseits ein zweites Sitzkissen (31) und eine zweite Rückenlehne (41) umfasst,
wobei das Cockpit (25) in einer ersten Zweisitzerkonfiguration verfügbar ist, wobei sich der erste Sitz (26) in einer ersten Position befindet, in der er sich entlang einer ersten Achse (Y) neben dem zweiten Sitz (27) befindet,
wobei das zweite Sitzkissen (31) und die zweite Rückenlehne (41) jeweils in einer zweiten und einer dritten Position angeordnet sind, wenn sich das Cockpit (25) in der ersten Position befindet,
**dadurch gekennzeichnet, dass** der erste Sitz (26) entlang der ersten Achse (Y) zwischen der ersten Position und einer vierten Position bewegt werden kann, das zweite Sitzkissen (31) zwischen der zweiten Position und einer fünften Position bewegt werden kann und die zweite Rückenlehne (41) zwischen der dritten Position und einer sechsten Position parallel zu einer zweiten Achse (X), die quer zu der ersten Achse (Y) verläuft, bewegt werden kann,
wobei das Cockpit (25) wahlweise in eine zweite Einsitzerkonfiguration bewegt werden kann, wobei sich der erste Sitz (26) in der vierten Position befindet, sich das zweite Sitzkissen (31) in der fünften Position befindet und sich die zweite Rückenlehne (41) in der sechsten Position befindet,
wobei der erste Sitz (26) in der vierten Position zumindest teilweise in dem Raum angeordnet ist, der von dem zweiten Sitz (27) eingenommen wird, wenn sich das Cockpit (25) in der ersten Konfiguration befindet.

2. Cockpit nach Anspruch 1, **dadurch gekennzeichnet, dass** das erste Sitzkissen (30) des ersten Sitzes (26) in der vierten Position zumindest teilweise in dem Raum angeordnet ist, der von dem zweiten Sitzkissen (31) eingenommen wird, das in der zweiten Position angeordnet ist, und/oder
**dadurch gekennzeichnet, dass** die erste Rückenlehne (40) des ersten Sitzes (26) in der vierten Position zumindest teilweise in dem Raum angeordnet ist, der von der zweiten Rückenlehne (41) eingenommen wird, die in der dritten Position angeordnet ist.

3. Cockpit nach Anspruch 1 oder 2, **dadurch gekennzeichnet, dass** der erste Sitz (26), der in der vierten Position angeordnet ist, die zweite Rückenlehne (41), die in der sechsten Position angeordnet ist, in einer Ansicht parallel zu der zweiten Achse (X) zumindest teilweise überlappt,
die zweite Rückenlehne (41), die in der sechsten Position angeordnet ist, entlang der ersten Achse (Y) relativ zu dem ersten Sitz (26), der in der zweiten Position angeordnet ist, versetzt ist, und/oder
**dadurch gekennzeichnet, dass** der erste Sitz (26), der in der vierten Position angeordnet ist, das zweite Sitzkissen (31), das in der fünften Position angeordnet ist, in einer Ansicht parallel zu der ersten Achse (Y) zumindest teilweise überlappt.

4. Cockpit nach einem der vorhergehenden Ansprüche, **dadurch gekennzeichnet, dass** sich das zweite Sitzkissen (31) um eine dritte Achse (H), die parallel zu der zweiten Achse (X) verläuft, zwischen der dritten und vierten Position drehen kann.

5. Cockpit nach Anspruch 4, **dadurch gekennzeichnet, dass** das zweite Sitzkissen (31) eine erste und eine zweite seitliche Endkante (160, 161), die einander gegenüberliegen, umfasst,
wobei die zweite Kante (161) entlang der ersten Achse (Y) zwischen der ersten Kante (160) und dem ersten Sitz (26) in der ersten Konfiguration des Cockpits (25) eingesetzt ist,
die zweite Kante (161) in einem ersten Abstand von der ersten Kante (160) entlang der ersten Achse (Y) in der ersten Konfiguration und in einem zweiten Abstand, der kleiner als der erste Abstand ist, von der ersten Kante (160) entlang der ersten Achse (Y) in der zweiten Konfiguration angeordnet ist.

6. Cockpit nach einem der vorhergehenden Ansprüche, **dadurch gekennzeichnet, dass** die zweite Achse (X) und die dritte Achse (H) parallel zueinander sind, und/oder
**dadurch gekennzeichnet, dass** das erste Sitzkissen (30) und die erste Rückenlehne (40) einstückig parallel zu der ersten Achse (Y) zusammengleiten können.

7. Kraftfahrzeug (1), umfassend:
- einen Insassenraum (3);
- eine Vielzahl von Antriebselementen (10; 11, 12), die im Inneren des Insassenraums (3) untergebracht sind und von einem Fahrer bedient werden können, um die Bewegungsbahn und die Geschwindigkeit des Kraftfahrzeugs (1) zu steuern;
- mindestens ein Steuerelement (6, 7, 9, 21), das mit mindestens einem Antriebselement (10; 11, 12) durch einen Drive-by-Wire-Modus verbunden ist, und
- das Cockpit (25) nach einem der vorhergehenden Ansprüche.

8. Kraftfahrzeug nach Anspruch 7, **dadurch gekennzeichnet, dass** es ferner Folgendes umfasst:
- eine Karosserie (2);
- eine erste und eine zweite Tür (8a, 8b), die relativ zu der Karosserie (2) zwischen jeweiligen siebten offenen Positionen, in denen sie den Zugang zu dem Insassenraum (3) ermöglichen, und einer jeweiligen achten geschlossenen Position, in der sie den Zugang zu dem Insassenraum (3) verhindern, bewegt werden können,
wobei das zweite Sitzkissen (31) zwischen der zweiten Tür (8b), die in der jeweiligen achten geschlossenen Position angeordnet ist, und dem ersten Sitz (26), der in der ersten Position angeordnet ist, eingesetzt ist, wenn es in der zweiten Position angeordnet ist,
wobei das zweite Sitzkissen (31) der zweiten Tür (8b) zugewandt ist, die in der jeweiligen achten geschlossenen Position angeordnet ist, wenn es in der zweiten Position angeordnet ist.

9. Kraftfahrzeug nach Anspruch 7 oder 8, **dadurch gekennzeichnet, dass** die zweite Rückenlehne (41) relativ zu dem ersten Sitz (26) in der zweiten Konfiguration des Cockpits (25) bezogen auf eine normale Vorwärtsbewegungsrichtung bei Gebrauch des Kraftfahrzeugs (1) parallel zu der zweiten Achse (X) zurückgesetzt ist.

10. Verfahren zur Konfiguration eines Cockpits (25) für ein Kraftfahrzeug (1), umfassend die folgenden Schritte:
i) Anordnen des Cockpits (25) in einer ersten Zweisitzerkonfiguration, wobei sich ein erster Sitz (26) in einer ersten Position befindet, in der er sich entlang einer ersten Achse (Y) neben einem zweiten Sitz (27) befindet,
wobei der erste Sitz (26) seinerseits ein erstes Sitzkissen (30) und eine erste Rückenlehne (40) umfasst,
wobei der zweite Sitz (27) seinerseits ein zweites Sitzkissen (31) und eine zweite Rückenlehne (41) umfasst,
wobei das zweite Sitzkissen (31) und die zweite Rückenlehne (41) jeweils in einer zweiten und einer dritten Position angeordnet sind, wenn sich das Cockpit (25) in der ersten Position befindet,
**dadurch gekennzeichnet, dass** es den Schritt ii) des Wechselns des Cockpits (25) in eine zweite Einsitzerkonfiguration umfasst, in der sich der erste Sitz (26) in einer vierten Position befindet, sich das zweite Sitzkissen (31) in einer fünften Position befindet und sich die zweite Rückenlehne (41) in einer sechsten Position befindet,
wobei der Schritt ii) den Schritt iii) des Platzierens von mindestens einem Teil des ersten Sitzes (26) in der vierten Position in dem von dem zweiten Sitz (27) eingenommenen Raum in der ersten Konfiguration umfasst.

11. Verfahren nach Anspruch 10, **dadurch gekennzeichnet, dass** der Schritt iii) die folgenden Schritte umfasst:
iv) zumindest teilweises Platzieren des ersten Sitzkissens (30) des ersten Sitzes (26) in der vierten Position im von dem in der zweiten Position angeordneten Sitzkissen (31) eingenommenen Raum und/oder
v) zumindest teilweises Anordnen der ersten Rückenlehne (40) des ersten Sitzes (26) in der vierten Position im von dem in der dritten Position angeordneten Rückenlehne (41) eingenommenen Raum.

12. Verfahren nach Anspruch 11, **dadurch gekennzeichnet, dass** der Schritt ii) die folgenden Schritte umfasst:
vi) Bewegen der zweiten Rückenlehne (41) von der dritten Position in die sechste Position entlang einer zweiten Achse (X), die parallel zu der ersten Achse (Y) verläuft;
vii) Bewegen des zweiten Sitzkissens (31) von der zweiten Position in die fünfte Position und
viii) Bewegen des ersten Sitzes (26) in Richtung des zweiten Sitzkissens (31) von der ersten Position parallel zu der ersten Achse (Y) bis zu der vierten Position, in der er entlang der ersten Achse (Y) relativ zu der in der sechsten Position angeordneten zweiten Rückenlehne (41) versetzt ist.

13. Verfahren nach einem der Ansprüche 10 bis 12, **dadurch gekennzeichnet, dass** der Schritt viii) die folgenden Schritte umfasst:
ix) Verschieben des ersten Sitzes (26) in die vierte Position, sodass er die zweite Rückenlehne (41), die in der sechsten Position angeordnet ist, in einer Ansicht parallel zu der zweiten Achse (X) zumindest teilweise überlappt, und/oder
x) Verschieben des ersten Sitzes (26) in die vierte Position, sodass er das in der fünften Position angeordnete zweite Sitzkissen (31) in einer Ansicht parallel zu der ersten Achse (Y) zumindest teilweise überlappt.

14. Verfahren nach einem der Ansprüche 10 bis 13, **dadurch gekennzeichnet, dass** der Schritt vii) den Schritt xi) des Drehens des zweiten Sitzkissens (31) in der zweiten Position des zweiten Sitzkissens (31) um eine parallel zu der zweiten Achse (X) verlaufende dritte Achse (H) in Richtung einer Tür (8b) des Kraftfahrzeugs (1) umfasst, bis dieses der Tür (8b) zugewandt ist.

## Revendications

1. Poste de pilotage (25) pour un véhicule à moteur (1), comprenant :
- un premier siège (26) comprenant, à son tour, un premier coussin de siège (30) et un premier dossier (40) ; et
- un deuxième siège (27) comprenant à son tour un deuxième coussin de siège (31) et un deuxième dossier (41) ;
ledit poste de pilotage (25) étant disponible dans une première configuration biplace, dans lequel ledit premier siège (26) est dans une première position, dans lequel il est à côté dudit deuxième siège (27) le long d'un premier axe (Y) ;
ledit deuxième coussin de siège (31) et ledit deuxième dossier (41) étant disposés respectivement dans une deuxième et une troisième position lorsque ledit poste de pilotage (25) est dans ladite première position ;
**caractérisé en ce que** ledit premier siège (26) peut être déplacé le long dudit premier axe (Y) entre ladite première position et une quatrième position, ledit deuxième coussin de siège (31) peut être déplacé entre ladite deuxième position et une cinquième position et ledit deuxième dossier (41) peut être déplacé entre ladite troisième position et une sixième position parallèlement à un deuxième axe (X), qui est transversal audit premier axe (Y) ;
ledit poste de pilotage (25) pouvant être déplacé sélectivement vers une deuxième configuration monoplace, dans lequel ledit premier siège (26) est dans ladite quatrième position, ledit deuxième coussin de siège (31) est dans ladite cinquième position et ledit deuxième dossier (41) est dans ladite sixième position ;
ledit premier siège (26), dans ladite quatrième position, étant au moins partiellement disposé dans l'espace occupé par ledit deuxième siège (27) lorsque ledit poste de pilotage (25) est dans ladite première configuration.

2. Poste de pilotage selon la revendication 1, **caractérisé en ce que** ledit premier coussin de siège (30) dudit premier siège (26), dans ladite quatrième position, est au moins partiellement disposé dans l'espace occupé par ledit deuxième coussin de siège (31) disposé dans ladite deuxième position ; et/ou
**caractérisé en ce que** ledit premier dossier (40) dudit premier siège (26), dans ladite quatrième position, est au moins partiellement disposé dans l'espace occupé par ledit deuxième dossier (41) disposé dans ladite troisième position.

3. Poste de pilotage selon la revendication 1 ou 2, **caractérisé en ce que** ledit premier siège (26) disposé dans ladite quatrième position chevauche au moins partiellement ledit deuxième dossier (41) disposé dans ladite sixième position, dans une vue parallèle audit deuxième axe (X) ;
ledit deuxième dossier (41) disposé dans ladite sixième position étant décalé le long dudit premier axe (Y) par rapport audit premier siège (26) disposé dans ladite deuxième position ; et/ou
**caractérisé en ce que** ledit premier siège (26) disposé dans ladite quatrième position chevauche au moins partiellement ledit deuxième coussin de siège (31) disposé dans ladite cinquième position, dans une vue parallèle audit premier axe (Y).

4. Poste de pilotage selon l'une quelconque des revendications précédentes, **caractérisé en ce que** ledit deuxième coussin de siège (31) peut tourner autour d'un troisième axe (H), qui est parallèle audit deuxième axe (X), entre lesdites troisième et quatrième positions.

5. Poste de pilotage selon la revendication 4, **caractérisé en ce que** ledit deuxième coussin de siège (31) comprend un premier et un deuxième bord latéral (160, 161) opposés l'un à l'autre ;
ledit deuxième bord (161) étant interposé, le long dudit premier axe (Y), entre ledit premier bord (160) et ledit premier siège (26) dans ladite première configuration dudit poste de pilotage (25) ;
ledit deuxième bord (161) étant disposé à une première distance dudit premier bord (160) le long dudit premier axe (Y) dans la première configuration et à une deuxième distance, qui est inférieure à la première distance, dudit premier bord (160) le long dudit premier axe (Y) dans ladite deuxième configuration.

6. Poste de pilotage selon l'une quelconque des revendications précédentes, **caractérisé en ce que** ledit deuxième axe (X) et ledit troisième axe (H) sont parallèles l'un à l'autre ; et/ou
**caractérisé en ce que** le premier coussin de siège (30) et ledit premier dossier (40) peuvent coulisser ensemble d'une manière intégrale parallèlement audit premier axe (Y).

7. Véhicule à moteur (1) comprenant :
- un habitacle (3) ;
- une pluralité d'éléments de conduite (10 ; 11, 12), qui sont logés à l'intérieur dudit habitacle (3) et peuvent être actionnés par un conducteur afin de contrôler la trajectoire et la vitesse dudit véhicule à moteur (1) ;
- au moins un élément de commande (6, 7, 9, 21) relié à au moins un élément de conduite (10 ; 11, 12) par un mode de conduite par fil ; et
- ledit poste de pilotage (25) selon l'une quelconque des revendications précédentes.

8. Véhicule à moteur selon la revendication 7, **caractérisé en ce qu'**il comprend en outre :
- une carrosserie (2) ;
- une première et une deuxième portière (8a, 8b), qui peuvent être déplacées par rapport à ladite carrosserie (2) entre une septième position ouverte respective, dans lequel elles permettent l'accès à l'habitacle (3), et une huitième position fermée respective, dans lequel elles interdisent l'accès audit habitacle (3) ;
ledit deuxième coussin de siège (31) est interposé entre ladite deuxième portière (8b) disposée dans la huitième position fermée respective et ledit premier siège (26) disposé dans ladite première position, lorsqu'il est disposé dans ladite deuxième position ;
ledit deuxième coussin de siège (31) fait face à ladite deuxième portière (8b) disposée dans la huitième position fermée respective, lorsqu'il est disposé dans ladite deuxième position.

9. Véhicule à moteur selon la revendication 7 ou 8, **caractérisé en ce que** ledit deuxième dossier (41) est reculé par rapport audit premier siège (26) dans ladite deuxième configuration du poste de pilotage (25), en référence à une direction normale de déplacement vers l'avant, en cours d'utilisation, dudit véhicule à moteur (1) parallèlement audit deuxième axe (X).

10. Procédé de configuration d'un poste de pilotage (25) pour un véhicule à moteur (1), comprenant les étapes suivantes :
i) la disposition dudit poste de pilotage (25) dans une première configuration biplace, dans lequel un premier siège (26) se trouve dans une première position, dans lequel il est à côté d'un deuxième siège (27) le long d'un premier axe (Y) ;
ledit premier siège (26) comprenant à son tour un premier coussin de siège (30) et un premier dossier (40) ;
ledit deuxième siège (27) comprenant à son tour un deuxième coussin de siège (31) et un deuxième dossier (41) ;
ledit deuxième coussin de siège (31) et ledit deuxième dossier (41) étant disposés respectivement dans une deuxième et une troisième position lorsque ledit poste de pilotage (25) est dans ladite première position ;
**caractérisé en ce qu'**il comprend l'étape ii) de passage dudit poste de pilotage (25) à une deuxième configuration monoplace dans laquelle ledit premier siège (26) est dans une quatrième position, ledit deuxième coussin de siège (31) est dans une cinquième position et ledit deuxième dossier (41) est dans une sixième position ;
ladite étape ii) comprenant l'étape iii) de positionnement d'au moins une partie dudit premier siège (26) dans la quatrième position dans l'espace occupé par ledit deuxième siège (27) dans ladite première configuration.

11. Procédé selon la revendication 10, **caractérisé en ce que** ladite étape iii) comprend les étapes suivantes :
iv) le positionnement au moins partiellement dudit premier coussin de siège (30) dudit premier siège (26) dans ladite quatrième position dans l'espace occupé par ledit deuxième coussin de siège (31) disposé dans ladite deuxième position ; et/ou
v) le positionnement au moins partiellement dudit premier dossier (40) dudit premier siège (26) dans ladite quatrième position dans l'espace occupé par ledit deuxième dossier (41) disposé dans ladite troisième position.

12. Procédé selon la revendication 11, **caractérisé en ce que** ladite étape ii) comprend les étapes suivantes :
vi) le déplacement dudit deuxième dossier (41) de ladite troisième position à ladite sixième position le long d'un deuxième axe (X) parallèle audit premier axe (Y) ;
vii) le déplacement dudit deuxième coussin de siège (31) de ladite deuxième position à ladite cinquième position ; et
viii) le déplacement dudit premier siège (26) vers ledit deuxième coussin de siège (31) depuis ladite première position, parallèle audit premier axe (Y), jusqu'à ladite quatrième position, dans lequel il est décalé, le long dudit premier axe (Y), par rapport audit deuxième dossier (41) disposé dans ladite sixième position.

13. Procédé selon l'une quelconque des revendications de 10 à 12, **caractérisé en ce que** ladite étape viii) comprend les étapes suivantes :
ix) le déplacement dudit premier siège (26) dans ladite quatrième position de manière à ce qu'il chevauche au moins partiellement ledit deuxième dossier (41) disposé dans ladite sixième position, dans une vue parallèle audit deuxième axe (X) ; et/ou
x) le déplacement dudit premier siège (26) dans ladite quatrième position de manière à ce qu'il chevauche au moins partiellement ledit deuxième coussin de siège (31) disposé dans ladite cinquième position, dans une vue parallèle audit premier axe (Y) .

14. Procédé selon l'une quelconque des revendications de 10 à 13, **caractérisé en ce que** ladite étape vii) comprend l'étape xi) de rotation dudit deuxième coussin de siège (31) vers une portière (8b) dudit véhicule à moteur (1) jusqu'à ce qu'il soit en face de ladite portière (8b) dans ladite deuxième position dudit deuxième coussin de siège (31) autour d'un troisième axe (H) parallèle audit deuxième axe (X).
